# FASCICULE DE BREVET EUROPEEN

(11) **EP 1 369 591 B1**
(45) Date de publication et mention de la délivrance du brevet: **28.03.2007**
(21) Numéro de dépôt: 03291100.0
(22) Date de dépôt: 09.05.2003
(51) Int. Cl.: F04D 15/02, H02J 5/00

(54) **Groupe motopompe antidéflagrant à alimentation d'un capteur de niveau par le câble d'alimentation du moteur**
Motorpumpengruppe mit Sensorstromversorgung über das Pumpenstromkabel
Motor pump unit with sensor power supply using the mains connection

(30) Priorité: 07.06.2002 FR 0207006
(43) Date de publication de la demande: 10.12.2003
(73) Titulaire: KSB S.A.S, 92230 Gennevilliers (FR)
(72) Inventeur: Berthon, Jacques, 36250 Niherne (FR); Smis, Martial, 62840 Sailly sur La Lys (FR)
(74) Mandataire: Eidelsberg, Victor Albert

(56) Documents cités:
- WO-A-01/86831
- WO-A-96/23368
- US-A- 5 521 592

## Description

Un groupe motopompe comprend une pompe entraînée par un moteur électrique. Le moteur électrique est alimenté par une source de courant alternatif par l'intermédiaire d'un câble d'alimentation dans lequel passent des fils. Ce sont notamment les fils de phase, les fils d'état de capteurs intégrés à la pompe et le fil de terre. Un capteur de niveau permet de mettre la pompe en route ou de l'arrêter suivant le niveau de l'effluent à relever dans le puisard dans lequel est montée la pompe. Le capteur de niveau nécessite un dispositif d'alimentation en énergie électrique pour manoeuvrer un interrupteur de commande de la pompe. Ce dispositif d'alimentation en énergie électrique nécessite, lorsque le groupe motopompe est antidéflagrant, un câble supplémentaire d'équipotentialité mettant au potentiel de terre tous les accessoires et la pompe. Un groupe motopompe antidéflagrant est coûteux par le nombre des connecteurs à chicane qui doivent être utilisés et par la longueur des câbles d'alimentation et d'équipotentialité qu'il faut utiliser.

Au US-A 5 521 592 et au W0 96/23368, on décrit un groupe motopompe antidéflagrant comprenant une pompe entraînée par un moteur électrique alimenté par une source de courant alternatif par l'intermédiaire d'un câble d'alimentation à fils et un capteur de niveau nécessitant un dispositif d'alimentation en énergie électrique, qui comprend un premier circuit magnétique annulaire entourant une première ouverture dans laquelle passe le câble et comportant un premier bobinage dont les deux lignes de sortie sont reliées au capteur et l'une des lignes du câble est alimentée par un générateur de trains d'impulsions.

Le capteur est ainsi alimenté non pas par une ligne spéciale, mais par l'un des fils du câble d'alimentation lors des trains d'impulsions qui sont produits avec entre eux des pauses. La longueur de câble à utiliser est moindre qu'auparavant. L'utilisation du câble d'alimentation à fil pour alimenter également le capteur de niveau permet de se dispenser de tirer un câble spécial pour alimenter ce capteur. Grâce au premier circuit magnétique qui peut être notamment un tore, on supprime tout contact électrique.

L'invention vise à se dispenser d'un connecteur électrique coûteux entre le capteur et la pompe.

On peut y parvenir par le fait que les deux lignes et le capteur sont enfermés dans une enveloppe antidéflagrante, à condition qu'il n'y ait pas d'étincelle.

On satisfait à cette condition par le fait que l'énergie sortant des deux lignes est inférieure à 50 milliwatts et, de préférence à 30 milliwatts.

De préférence, les deux lignes de sortie du premier bobinage sont reliées au capteur par l'intermédiaire d'un condensateur d'emmagasinage d'énergie. On emmagasine ainsi de l'énergie pendant la présence des trains d'impulsions, en sorte qu'il est possible, pendant les pauses entre les trains d'impulsions, d'utiliser cette énergie pour que le capteur puisse envoyer l'information de niveau à l'interrupteur de commande de la pompe. Le courant alternatif provenant du premier circuit magnétique est transformé en courant continu par le convertisseur courant alternatif/courant continu, notamment par une diode, avant d'aller au condensateur d'emmagasinage d'énergie. De préférence, les deux lignes, le convertisseur, le condensateur et le capteur sont enfermés dans l'enveloppe.

Afin de pouvoir envoyer l'information donnée par le capteur soit directement à la pompe dans le cas d'une pompe intelligente munie soi-même d'un interrupteur de commande, soit à un interrupteur de commande se trouvant à l'extérieur de la zone antidéflagrante, tout en utilisant une partie du circuit ayant permis d'apporter de l'énergie au capteur de niveau, il est prévu que les deux lignes de sortie du bobinage soient reliées au capteur par l'intermédiaire d'un premier multiplexeur monté en amont du condensateur d'emmagasinage d'énergie, il est prévu un circuit de retour allant du capteur au premier multiplexeur et de celui-ci au premier circuit magnétique par les deux lignes de sortie et il est prévu un second circuit magnétique annulaire entourant une seconde ouverture dans laquelle passe le câble et comportant un second bobinage. Pendant les pauses, l'énergie fournie par le condensateur est, en fonction de l'état du capteur, renvoyée en passant par le premier multiplexeur au premier bobinage. Elle crée un champ magnétique dans le premier circuit magnétique. Le flux magnétique induit un courant dans la ligne. La ligne, en passant dans le deuxième circuit magnétique, y crée un champ magnétique. Les seconds bobinages envoient un courant et une tension au second multiplexeur qui, pendant les pauses, envoie l'information correspondante à l'interrupteur de commande de la pompe.

Le générateur de trains d'impulsions peut être relié directement à la ligne qui est utilisée dans le câble aux fins de l'invention mais, suivant un mode de réalisation préféré, le générateur de trains d'impulsions est relié au second bobinage du second circuit magnétique par le second multiplexeur, le premier multiplexeur étant esclave du second, ce qui signifie que les trains d'impulsions passant dans le premier multiplexeur y passent de manière synchronisée avec ceux passant dans le second multiplexeur.

Le capteur de niveau statique peut être à flotteur ou sans flotteur avec ou non des contacts mécaniques. Ce peut être aussi un capteur optique. On préfère un capteur électronique, notamment capacitif à faible consommation.

Pour mieux séparer la fréquence des impulsions que l'on envoie de celles que l'on reçoit, le second multiplexeur est relié par l'intermédiaire d'un discriminateur de fréquences à l'interrupteur de commande de la pompe.

La Figure unique du dessin annexé illustre l'invention.

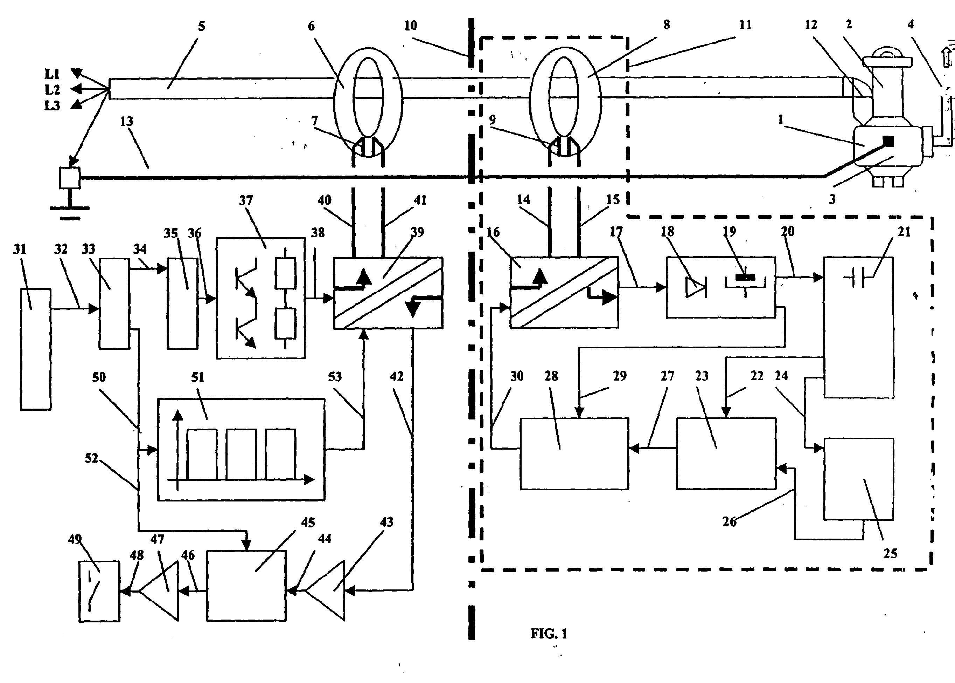

Le groupe motopompe antidéflagrant schématisé à la Figure 1 comprend une pompe 1 entraînée par un moteur 2 électrique. La pompe 1 a une tubulure 3 d'admission et une tubulure 4 de refoulement. Le moteur 2 est alimenté par une source de courant alternatif symbolisée par les lignes L1, L2, L3 de phase et par une ligne de terre. Ces quatre lignes passent dans un câble 5 antidéflagrant. Le câble 5 passe dans un second tore 6 magnétique sur lequel sont bobinés des seconds bobinages 7 avant de passer dans un premier tore 8 magnétique sur lequel sont bobinés des premiers bobinages 9. La distance entre la source L1, L2, L3 et le tore 8 est de 10 m. On a représenté par 10 une paroi symbolique séparant à gauche la zone où on ne doit pas assurer une protection contre la déflagration et à droite la zone qui doit être antidéflagrante. Le premier tore 9 est enfermé dans une enveloppe 11 antidéflagrant étanche qui entoure également tout le circuit électronique se trouvant à droite de la paroi 10. Tous les composants à l'intérieur de l'enveloppe 11 sont surmoulés dans une résine de remplissage pour améliorer la résistance aux chocs. L'enveloppe 11 est annulaire avec un trou central de passage du câble 5. Le câble 5 est connecté au moteur 2 par un connecteur 12 antidéflagrant à chicane. Le moteur 1 est relié par un fil 13 d'équipotentialité à la terre qui boucle le circuit. La partie du câble 5 à droite de la paroi 10 a une longueur de 10 m.

Les premiers bobinages 9 sont reliés par deux lignes 14, 15 de sortie à un multiplexeur 16 qui est relié par un conducteur 17 de sortie à une diode 18 convertissant le courant alternatif en courant continu, laquelle est reliée à un condensateur 19 d'emmagasinage d'énergie dont la sortie 20 est reliée à un capteur 21 de niveau capacitif. Le capteur 21 est lui aussi, en réalité, enfermé dans l'enveloppe 11.

Du capteur 21, un conducteur 22 mène à une logique combinatoire ET 23, tandis qu'un conducteur 24 mène à un comparateur 25 de fréquences. Le comparateur 25 est relié par un conducteur 26 à la logique combinatoire ET 23. Une sortie 27 de la logique combinatoire ET 23 mène à un convertisseur 28 convertissant le courant continu en courant alternatif. Un conducteur 29 apporte l'énergie du condensateur 19 au convertisseur 28. Un conducteur 30 relie le convertisseur 28 au multiplexeur 16.

Du côté gauche de la paroi 10, c'est-à-dire en pratique dans une armoire, avec toutefois également la possibilité que cela se trouve soit dans la pompe 1, soit dans le moteur 2, qui doivent être considérés en raison de leur étanchéité comme n'étant pas du côté droit de la paroi 10 bien qu'en fait ils s'y trouvent, est prévu un oscillateur 31 piloté servant d'horloge. L'horloge est reliée par un conducteur 32 à un diviseur 33 moyenne fréquence, lequel est relié par un conducteur 34 à une commande 35 de convertisseur. La commande 35 de convertisseur est reliée par un conducteur 36 à un convertisseur 37 qui convertit du courant continu en du courant alternatif. Il s'agit d'un convertisseur de puissance dont l'intensité peut être de 3 ampères. Du convertisseur 37, un conducteur 38 mène à un multiplexeur 39 qui est relié aux deux lignes 40, 41 de sortie des seconds bobinages 7.

Du multiplexeur 39, part un conducteur 42 qui mène à un amplificateur 43 de signal, lequel envoie des signaux amplifiés par un conducteur 44 à un discriminateur 45 de fréquences. Le discriminateur 45 envoie par un conducteur 46 un signal à un amplificateur de mesure 47 qui attaque par un conducteur 48 un interrupteur 49 de commande de la pompe, cet interrupteur pouvant être, comme il est représenté à la figure, à gauche de la paroi 10, mais aussi, en cas de pompe intelligente, à l'intérieur de la pompe 1 ou du moteur 2.

Du diviseur 33, un conducteur 50 mène à l'entrée d'un séquenceur 51 de multiplexage. Du diviseur 33, un conducteur 52 mène au discriminateur 45. Du séquenceur 51, un conducteur 53 mène au second multiplexeur 39.

Le premier multiplexeur 16, la diode 18, le condensateur 19, le capteur 21, la logique ET 23, le comparateur 25, la logique ET 26 et le convertisseur 28 sont montés en un même circuit intégré.

Le groupe motopompe fonctionne de la manière suivante :
l'oscillateur 31 fournit des trains d'impulsions à 23,5 kHz au diviseur 33 qui fournit lui-même deux types de trains d'impulsions, à savoir, d'une part, des trains d'impulsions à 50 Hz passant par le conducteur 34 et, d'autre part, des trains d'impulsions à 2,4 Hz passant par le conducteur 50. Les trains d'impulsions à 50 Hz vont au second multiplexeur 39 en passant par la commande 35 de convertisseur et par le convertisseur 37 et le conducteur 38 pendant 400 millisecondes. Les trains d'impulsions à 2,4 Hz vont, d'une part, par le conducteur 52 au discriminateur 45 et, d'autre part, en passant par le séquenceur 51 et par le conducteur 53, au second multiplexeur 39 pendant une durée de 50 millisecondes.

Pendant 400 millisecondes, de l'énergie passe par les lignes 40 et 41 dans les seconds bobinages 7 du tore 6 magnétique. Il crée ainsi un flux magnétique dans le câble 5, ce qui y crée un courant pulsé qui, lorsque le câble passe dans le premier tore 8 magnétique, crée dans ses bobinages 9 un courant alternatif. Ce courant alternatif passe par les lignes 14 et 15 dans le multiplexeur 16 qui, pendant cette première durée de 400 millisecondes, est dans une position telle qu'il alimente le conducteur 17, de sorte que le courant est redressé par la diode 18 et est emmagasiné dans le condensateur 19 d'emmagasinage d'énergie. Il alimente pendant ces 400 millisecondes également le capteur 21, mais l'énergie dont il dispose est bien supérieure à celle dont a besoin le capteur 21. Le capteur 21 se trouve ainsi alimenté sans câble d'alimentation spécial ni connecteur spécial.

Pendant les 50 millisecondes venant après les premières 400 millisecondes et représentant un premier intervalle entre les trains d'impulsions, le premier multiplexeur 16 ne met plus en liaison les lignes 14 et 15 avec le conducteur 17, mais met ses lignes 14, 15 en liaison avec le conducteur 30, en sorte qu'un signal fourni par le capteur 21 va par le conducteur 24 au comparateur de fréquences 25. Ce comparateur prend l'état zéro si la fréquence du signal qu'il reçoit par le conducteur 24 est supérieure à 35,6 ps, mais prend l'état un si cette valeur est inférieure à 35,6 us, ce qui correspond au cas où il y a respectivement de l'eau au niveau du capteur ou il n'y en a pas. Le signal correspondant du comparateur 25 est envoyé par le conducteur 26 à la logique 23, laquelle reçoit dans le même temps par le conducteur 22 une fréquence de 1,7 kHz. Comme on a à la fois dans la logique 23 et une fréquence 1,7 kHz et l'état un, la logique 23 envoie par le conducteur 27 un signal correspondant de commande au convertisseur 28, lequel reçoit de l'énergie par le conducteur 29 et transforme ce courant continu en un courant alternatif de 5 volts et de 5 milliampères, soit 1,7 kHz, pendant les 50 millisecondes qui ont fait suite aux premières 400 millisecondes. Ce courant est réinjecté par le conducteur 30 dans le premier multiplexeur 16 et va par les lignes 14, 15 dans les premiers bobinages 9 du tore 8. Ils y créent un flux magnétique qui fait qu'il passe un courant dans les fils du câble 5 allant vers le second tore 6 magnétique. Le courant passant dans les fils du câble 5, qui lui-même passe à l'intérieur du tore 6, fait qu'il se crée un courant dans les seconds bobinages 7. Ce courant est envoyé par les lignes 40, 41 au second multiplexeur 39. Pendant ces 50 millisecondes, le deuxième multiplexeur 39 est en une position telle qu'il transmet le courant provenant des lignes 40, 41 par le conducteur 42 à l'amplificateur 43 et par le conducteur 44 au discriminateur 45. Le discriminateur 45 discrimine la fréquence à 50 Hz de celle à 1,7 kHz et, s'il voit cette fréquence de 1,7 kHz, il donne l'ordre par le conducteur 46 à l'amplificateur de mesure 47 de modifier l'état de l'interrupteur 49.

Pendant les 400 millisecondes suivantes, les opérations qui ont eu lieu pendant les premières 400 millisecondes se répètent, et ainsi de suite.

## Revendications

1. Groupe motopompe antidéflagrant comprenant une pompe (1) entraînée par un moteur (2) électrique alimenté par une source (L1, L2, L3) de courant alternatif par l'intermédiaire d'un câble (5) d'alimentation à fils et un capteur (21) de niveau nécessitant un dispositif d'alimentation en énergie électrique, qui comprend un premier circuit magnétique (8) annulaire entourant une première ouverture dans laquelle passe le câble (5) et comportant un premier bobinage (9) dont les deux lignes (14, 15) de sortie sont reliées au capteur (21) et l'une des lignes du câble (5) est alimentée par un générateur (37) de trains d'impulsions.
**caractérisé en ce que** les deux lignes (14,15) et le capteur (21) sont enfermés dans une enveloppe (11) antidéflagrante et l'énergie sortant par les deux lignes (14, 15) est inférieure à 50 milliwatts et, de préférence, à 30 milliwatts.

2. Groupe motopompe antidéflagrant suivant la revendication 1, **caractérisé en ce que** les deux lignes (14, 15) de sortie du premier bobinage (9) sont reliées au capteur (21) par l'intermédiaire d'un convertisseur de courant alternatif en courant continu et d'un condensateur (19) d'emmagasinage d'énergie.

3. Groupe motopompe suivant la revendication 2, **caractérisé en ce** les deux lignes (14,15), le convertisseur (18), le condensateur (19) et le capteur (21) sont enfermés dans l'enveloppe.

4. Groupe motopompe antidéflagrant suivant l'une des revendications précédentes, **caractérisé en ce que** les deux lignes (14, 15) de sortie du premier bobinage (9) sont reliées au capteur (21) par l'intermédiaire d'un premier multiplexeur (16) monté en amont du condensateur (19) d'emmagasinage d'énergie, il est prévu un circuit de retour (23, 25, 28) allant du capteur (21) au premier multiplexeur (16) et de celui-ci (16) au premier circuit magnétique (8) par les deux lignes (14, 15) de sortie et il est prévu un second circuit magnétique (6) annulaire entourant une seconde ouverture dans laquelle passe le câble (5) et comportant un second bobinage (7).

5. Groupe motopompe antidéflagrant suivant la revendication 4, **caractérisé en ce que** le générateur (37) de trains d'impulsions est relié au second bobinage (7) du second circuit magnétique (6) par le second multiplexeur (39), le premier multiplexeur étant esclave du second.

6. Groupe motopompe antidéflagrant suivant la revendication 4 ou 5, **caractérisé en ce que** le second multiplexeur (39) est relié par l'intermédiaire d'un discriminateur (45) de fréquences à un interrupteur (49) de commande de la pompe (1).

## Claims

1. Explosion-proof motor-driven pump assembly comprising a pump (1) driven by an electric motor (2) powered by a supply (L1, L2, L3) of alternating current by means of a power cable (5) and a level sensor (21) requiring a device for the supply of electrical power, which comprises a first annular magnetic circuit (8) surrounding a first aperture into which the cable (5) passes and comprising a first winding (9) of which the two output lines (14, 15) are connected to the sensor (21) and one of the lines of the cable (5) is powered by a pulse train generator (37),
**characterized in that** the two lines (14, 15) and the sensor (21) are enclosed in an explosion-proof casing (11) and the power output by the two lines (14, 15) is less than 50 milliwatts and, preferably, less than 30 milliwatts.

2. Explosion-proof motor-driven pump assembly according to Claim 1, **characterized in that** the two output lines (14, 15) of the first winding (9) are connected to the sensor (21) by means of an ac/dc transformer and a capacitor (19) for power storage.

3. Explosion-proof motor-driven pump assembly according to Claim 2, **characterized in that** the two lines (14, 15), the transformer (18), the capacitor (19) and the sensor (21) are enclosed in the casing.

4. Explosion-proof motor-driven pump assembly according to one of the preceding claims, **characterized in that** the two output lines (14, 15) of the first winding (9) are connected to the sensor (21) by means of a first multiplexer (16) mounted upstream of the capacitor (19) for power storage, a return circuit (23, 25, 28) is provided, leading from the sensor (21) to the first multiplexer (16) and from said multiplexer (16) to the first magnetic circuit (8) by means of the two output lines (14, 15) and a second annular magnetic circuit (6) is provided, surrounding a second aperture into which the cable (5) passes and comprising a second winding (7).

5. Explosion-proof motor-driven pump assembly according to Claim 4, **characterized in that** the pulse train generator (37) is connected to the second winding (7) of the second magnetic circuit (6) by means of the second multiplexer (39), the first multiplexer being subordinate to the second.

6. Explosion-proof motor-driven pump assembly according to Claim 4 or 5, **characterized in that** the second multiplexer (39) is connected by means of a frequency discriminator (45) to a switch (49) for controlling the pump (1).

## Patentansprüche

1. Explosionsgeschützte Motorpumpengruppe enthaltend eine Pumpe (1), die durch einen elektrischen Motor (2) angetrieben wird, der von einer Wechselstromquelle (L1, L3, L3) über ein Versorgungs-Leiterkabel (5) gespeist wird, und einen Niveausensor (21), der eine Vorrichtung zur Versorgung mit elektrischer Energie benötigt, die einen ersten ringförmigen magnetischen Kreis (8) umfasst, der eine erste Öffnung, durch die das Kabel (5) hindurchgeht, umgibt und eine erste Wicklung (9) umfasst, deren beide Ausgangsleitungen (14, 15) mit dem Sensor (21) verbunden sind, wobei eine Leitung des Kabels (5) durch einen Impulsfolgenerzeuger (37) versorgt wird, ***dadurch gekennzeichnet, dass*** die beiden Leitungen (14, 15) und der Sensor (21) in einem explosionsgeschützten Gehäuse (11) eingeschlossen sind und die aus den beiden Leitungen (14, 15) abgegebene Energie kleiner als 50 und vorzugsweise kleiner als 30 Milliwatt ist.

2. Explosionssichere Motorpumpengruppe nach Anspruch 1, ***dadurch gekennzeichnet, dass*** die beiden Ausgangsleitungen (14, 15) der ersten Wicklung (9) über einen Wechselstrom/Gleichstrom-Wandler und einen Energiespeicherkondensator (19) mit dem Sensor (21) verbunden sind.

3. Motorpumpengruppe nach Anspruch 2, ***dadurch gekennzeichnet, dass*** die beiden Leitungen (14, 15), der Wandler (18), der Kondensator (19) und der Sensor (21) im Gehäuse eingeschlossen sind.

4. Explosionssichere Motorpumpengruppe nach einem der vorhergehenden Ansprüche, ***dadurch gekennzeichnet, dass*** die beiden Ausgangsleitungen (14, 15) der ersten Wicklung (9) mit dem Sensor (21) über einen stromauf des Energiespeicherkondensators (19) montierten ersten Multiplexer (16) verbunden sind, wobei ein Rückkreis (23, 25, 28) vorgesehen ist, der vom Sensor (21) zum ersten Multiplexer (16) und von diesem (16) zum ersten magnetischen Kreis (8) über die beiden Ausgangsleitungen (14, 15) reicht, und ein zweiter ringförmiger magnetischer Kreis (6) vorgesehen ist, der eine zweite Öffnung umgibt, durch die das Kabel (5) hindurchgeht, und der eine zweite Wicklung (7) umfasst.

5. Explosionssichere Motorpumpengruppe nach Anspruch 4, **dadurch gekennzeichnet, dass** der Impulsfolgenerzeuger (37) mit der zweiten Wicklung (7) des zweiten Magnetkreises (6) über den zweiten Multiplexer (39) verbunden ist, wobei der erste Multiplexer der Slave des zweiten ist.

6. Explosionssichere Motorpumpengruppe nach Anspruch 4 oder 5, **dadurch gekennzeichnet, dass** der zweite Multiplexer (39) über einen Frequenzdiskriminator (45) mit einem Betätigungsschalter (49) der Pumpe (1) verbunden ist.
